(19) Europäisches Patentamt
European Patent Office
Office européen des brevets

(11) **EP 2 673 154 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(21) Anmeldenummer: **12704681.1**

(22) Anmeldetag: **08.02.2012**

(51) Int Cl.:
***B60J 10/17*** *(2016.01)* ***B60J 10/20*** *(2016.01)*
***B60J 10/88*** *(2016.01)*

(86) Internationale Anmeldenummer:
**PCT/EP2012/000568**

(87) Internationale Veröffentlichungsnummer:
**WO 2012/107221 (16.08.2012 Gazette 2012/33)**

(54) **DICHTUNGSPROFIL ZUR ABDICHTUNG EINER BEWEGBAREN FAHRZEUGFENSTERSCHEIBE**

SEAL FOR MOVABLE VEHICLE WINDOW PANE

JOINT D'ÉTANCHÉITÉ POUR VITRE MOBILE DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2011 DE 102011011111**

(43) Veröffentlichungstag der Anmeldung:
**18.12.2013 Patentblatt 2013/51**

(73) Patentinhaber: **CQLT SaarGummi Technologies S.à.r.l.**
**5544 Remich (LU)**

(72) Erfinder:
• **ALBA, Gianfranco**
**57350 Spichern (FR)**
• **MAGARD, Roman**
**66636 Tholey (DE)**
• **HARIG, Stefan**
**66679 Losheim (DE)**
• **KAST, Christian**
**66663 Merzig (DE)**
• **NOWICKI, Lukas**
**66265 Heusweiler (DE)**
• **THIEL, Daniel**
**66701 Oppen (DE)**

(74) Vertreter: **Bernhardt, Reinhold**
**Patentanwälte Bernhardt/Wolff**
**Partnerschaft mbB**
**Europaallee 17**
**66113 Saarbrücken (DE)**

(56) Entgegenhaltungen:
EP-A1- 1 382 474          WO-A1-2011/107689
DE-A1-102008 006 545      DE-A1-102008 027 877
DE-B4-102004 043 482      DE-U1-202007 003 837
US-A1- 2002 046 499       US-B1- 6 185 869
US-B1- 6 368 700

**Beschreibung**

"Dichtungsprofil zur Abdichtung einer bewegbaren Fahrzeugfensterscheibe"

Die Erfindung betrifft ein Dichtungsprofil zur Abdichtung einer bewegbaren Fahrzeugfensterscheibe an einem gebogenen oberen Schenkel einer Rahmeneinfassung, mit wenigstens einer Dichtungslippe, die im Abstand zur neutralen, entsprechend einem Längsschnitt durch das Dichtungsprofil verlaufenden Biegungsfläche des gebogen verlegten Dichtungsprofils von einem Schenkel eines U-förmigen Dichtungsabschnitts, in welchen die Fahrzeugfensterscheibe parallel zu den U-Schenkeln mit ihrem oberen Rand einschiebbar ist, absteht, wobei die Dichtungslippe gegenüber einer Ausgangsdicke (S), die sie an ihrem dem U-Profilschenkel zugewandten Ende aufweist, zu einer Seite hin aufgeweitet ist, und die dieser Seite abgewandte Begrenzungslinie der Querschnittsfläche der Dichtungslippe zu deren freien Ende hin sichelförmig ausläuft.

Dichtungsprofile zur Abdichtung einer bewegbaren Fahrzeugfensterscheibe mit den vorangehend beschriebenen Merkmalen gehen aus der US 6,185,869 B1 und der US 2002/00446499 A1 hervor. Die DE 10 2004 043 482 B4 beschreibt Dichtungsprofile mit ähnlicher Querschnittsform, deren aus thermoplastischem Elastomermaterial gebildete Lippen einen Gleitüberzug aufweisen, der aus härterem Elastomermaterial als die Lippe gebildet ist.

Bei gebogener Verlegung eines solchen Dichtungsprofils, das eine im Abstand zur neutralen Biegungsebene angeordnete Dichtungslippe aufweist, besteht die Gefahr, dass die Dichtungslippe infolge Stauchung eine wellige Form annimmt und ihrer Dichtfunktion nicht mehr gerecht wird. Die wellige Dichtungslippe kann sich nicht über ihre Länge durchgehend gegen das Dichtungsobjekt, z.B. eine Fahrzeugfensterscheibe, anlegen. Darüber hinaus beeinträchtigt sie das Aussehen des Dichtungsprofils und verursacht ggf. Windgeräusche.

Der Erfindung liegt die Aufgabe zugrunde, ein neues Dichtungsprofil der eingangs genannten Art mit einer bei gebogener Verlegung formbeständigen Dichtungslippe zu schaffen.

Das diese Aufgabe lösende erfindungsgemäße Dichtungsprofil beinhaltet die Merkmale von Anspruch 1.

Die vorliegende Erfindung geht aus von einer Dichtungslippe mit einer Gleitschicht, die aus Elastomermaterial besteht, wobei dieses Elastomermaterial härter als ein das übrige Dichtungsprofil bildendes Elastomermaterial ist. Solche Dichtungsstränge unterliegen in besonderem Maße einer Verformung der neutralen Biegungsebene ferner Dichtungslippen. Die Erfindung löst dieses Problem.

Vorteilhaft behält eine solcher Art geformte Dichtungslippe bei gebogener Verlegung des Dichtungsprofils eine über ihre Länge gleichmäßige Querschnittsform bei.

In einer bevorzugten Ausführungsform der Erfindung fällt die Aufweitung von einem Maximum (S1) zum freien Ende der Dichtungslippe hin auf ein Minimum (S3) ab und wächst von dem Minimum (S3) auf ein weiteres Maximum (S2) am freien Ende der Dichtungslippe an. Die Aufweitung umfasst also vorzugsweise eine Ausbauchung, an die sich zum freien Ende der Dichtungslippe hin nach einem Minimum wieder ein Maximum anschließt, so dass die gesamte Dichtungslippe am freien Ende in der Art einer Sichel abgebogen ist.

Gemäß der Erfindung weist die Dichtungslippe auf ihrer der Aufweitung abgewandten Seite eine Gleitschicht auf, wobei diese Gleitschicht vorzugsweise maximal bis an einen minimalen Rundungsradius am freien Ende der Dichtungslippe, d.h. deren Spitze heranreicht. Indem die Gleitschicht nicht um die Spitze herum auf die andere Seite der Lippe geführt ist, kann sie die Ausbildung einer Wellenform bei der Biegung des Dichtungsprofils nicht begünstigen.

Vorzugsweise ist die Dichtungslippe auf einer Seite aufgeweitet, die einer neutralen Biegungsfläche des Dichtungsprofils zugewandt ist.

Das Dichtungsprofil ist aus einem thermoplastischen Elastomer, hergestellt, der vorteilhaft eine Reduzierung des Gewichts des Dichtungsprofils erlaubt. Andererseits bestünde ohne die beschriebene Formung der Dichtungslippe gerade bei einem thermoplastischen Elastomer die Gefahr, dass sich das Dichtungsprofil bei der Biegung in unerwünschter Weise verformt.

Unabhängig von ihrem Material wird die Gleitschicht zweckmäßig mit dem übrigen Dichtungsprofil mitextrudiert.

In einer weiteren Ausführungsform der Erfindung erstreckt sich der Profilschenkel senkrecht zu der oben genannten neutralen Biegungsfläche und die Dichtungslippe steht schräg von dem Profilschenkel zu der neutralen Biegungsfläche hin geneigt ab.

Die Erfindung wird nachfolgend anhand eines Ausführungsbeispiels und der beiliegenden, sich auf dieses Ausführungsbeispiel beziehenden Zeichnungen näher erläutert. Es zeigen:

Fig. 1   ein Querschnitt eines Dichtungsprofils nach der Erfindung zum Abdichten einer Fahrzeugfensterscheibe an einem oberen Schenkel einer Rahmeneinfassung.

Fig. 2 und 3   eine Dichtungslippe des Dichtungsprofils von Fig. 1, und

Fig. 4   das Dichtungsprofil von Fig. 1 ausschnittsweise in einer gebogenen Seitenansicht.

Ein aus einem thermoplastischen Elastomer hergestelltes Dichtungsprofil 1 dient zur Abdichtung einer bewegbaren Fahrzeugfensterscheibe 23 am oberen Schenkel 22 einer Rahmeneinfassung und weist Befestigungsabschnitte 2 und 3 zur Verbindung des Dichtungsprofils mit Karosserieflanschen 4 und 5 auf, die an der Rahmeneinfassung gebildet sind. Der U-förmige Befestigungsabschnitt 2, in den eine U-förmige metallische Verstärkungseinlage 6 eingebettet ist, lässt sich auf den Karosserieflansch 4 aufstecken.

Das Dichtungsprofil 1 umfasst ferner einen U-förmigen Dichtungsabschnitt 25 mit einemlangen Profilschenkel 7, einem kurzen Profilschenkel 8 und einem Querschenkel 24. Der Querschenkel 24 bildet gleichzeitig einen U-Schenkel des Befestigungsabschnitts 2. In den U-förmigen Dichtungsabschnitt 25 greift parallel zu den Profilschenkeln 7,8 der obere Rand der durch Strichlinien angedeuteten Fensterscheibe 23 ein.

Von dem kurzen Profilschenkel 8 steht eine Dichtungslippe 9 zur Anlage gegen das obere Ende bzw. die Außenseite der Fensterscheibe 23 vor, die mit ihrem oberen Rand in das U-Profil des Dichtungsabschnitts 25 hinein eindrückbar ist. Zur Abdichtung auf der Scheibeninnenseite dienen Dichtungslippen 10 und 11, die von demlangen U-Schenkel 7 abstehen.

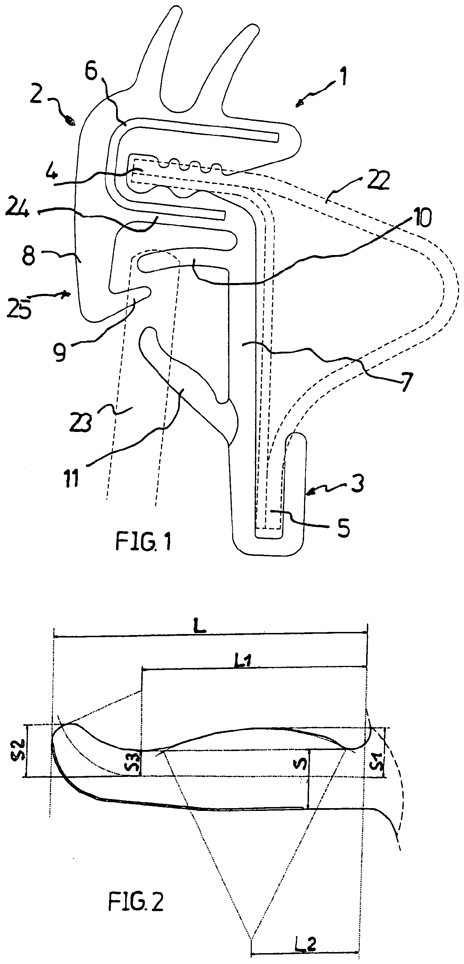

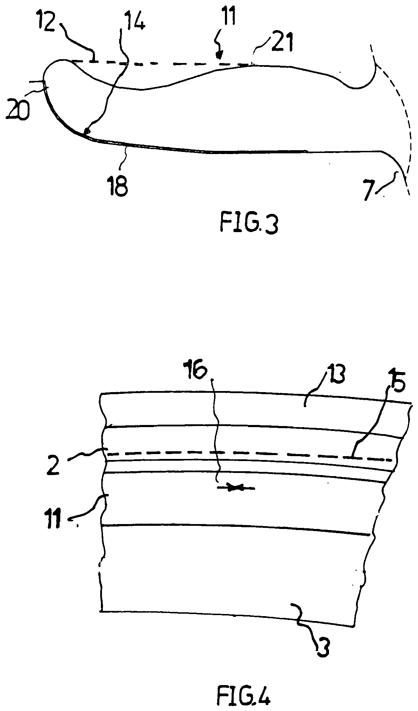

Das in Fig. 1 gezeigte Dichtungsprofil 1 ist zur gebogenen Verlegung gemäß Fig. 4 vorgesehen. Eine neutrale, das Dichtungsprofil 1 in Längsrichtung schneidende Biegungsfläche 15 ist durch eine Strichlinie angedeutet. Bei Verbiegung des Dichtungsprofils 1 wird die Dichtungslippe 11 gemäß Pfeil 16 gestaucht.

Die Dichtungslippe 11, die von dem längeren Profilschenkel 7 schräg zur neutralen Biegungsfläche 15 hin geneigt absteht, weist eine Gleitschicht 18 auf, die in Fig. 2 und 3 gezeigt ist. Die Gleitschicht 18 besteht aus einem härteren Elastomermaterial als das übrige Dichtungsprofil und ist gemeinsam mit dem übrigen Dichtungsprofil extrudiert. Die Gleitschicht 18 erstreckt sich auf der der Biegungsfläche 15 abgewandten Seite der Dichtungslippe 11 bis in einen zu der neutralen Biegungsfläche 15 hin sichelförmig abgebogenen Bereich 20 am freien Ende der Dichtungslippe 11.

Auf ihrer der neutralen Biegungsfläche 15 zugewandten Seite weist die Dichtungslippe 11 gegenüber der Ausgangsdicke S an dem an den Profilschenkel 7 angrenzenden Ende eine Aufweitung 21 auf. Gemäß Fig. 2 nimmt die Aufweitung 21 bis zu einem Maximum S1 zu, fällt dann wieder bis zu einem Minimum S3 ab, um schließlich wieder auf ein weiteres Maximum S3 nahe dem freien Ende der Dichtungslippe 11 anzuwachsen. Es gelten folgende Relationen:

$$S1 > \tfrac{1}{2} S \qquad\qquad\qquad (1)$$

$$S2 > \tfrac{1}{2} S \qquad\qquad\qquad (2).$$

Ferner gelten bzw. gilt:

$$S3 \leq S1 \ \text{und/oder} \ S3 \leq S2 \qquad\qquad\qquad (3).$$

Für die Gleichheitszeichen in den Relationen (3) ergibt sich die in Fig. 3 durch eine Strichlinie 12 angedeutete Lippenform mit einer bis zum freien Ende gleichmäßig durchgehenden Aufweitung 21. In jedem Fall läuft die der Aufweitung 21 gegenüberliegende Begrenzungslinie 14 der Querschnittsfläche der Dichtungslippe 11 zum freien Ende der Dichtungslippe 11 hin sichelförmig aus.

Für die Gesamtlänge L der Dichtungslippe 11, die Länge L1 bis zum Minimum S3 und die Länge L2 bis zum Maximum S1 gelten die Beziehungen:

$$\tfrac{1}{2} L \leq L1 \leq 5/6 \, L \qquad\qquad\qquad (4)$$

$$1/6 \, L \leq L2 \leq 4/6 \, L \qquad\qquad\qquad (5).$$

Beim Einschieben des oberen Randes der Fensterscheibe 23 in den U-förmigen Dichtungsabschnitt 25 werden die Dichtungslippen 9 bis 11 durch die Fensterscheibe 23 zu der neutralen Biegungsfläche 15 hin abgebogen. Die Dichtungslippe 11 liegt mit ihrer Gleitschicht 18 gegen die Fensterscheibe 23 an. Beim Herunterlassen der Fensterscheibe 23 sorgt die Gleitschicht 18 dafür, dass die Dichtungslippe 11 ihre zur neutralen Biegungsfläche 15 hin geneigte Stellung beibehält und nicht in entgegengesetzter Richtung umklappt. Die Gleitschicht 18 ist in dem gezeigten Ausführungsbeispiel etwa bis hin zum minimalen Rundungsradius, d.h. etwa bis zur Spitze am freien Ende der Dichtungslippe 11 geführt, mindestens aber muss sich die Gleitschicht 18 soweit bis zum Lippenende hin erstrecken, dass es beim Herablassen der Fensterscheibe nicht zu einer Reibung zwischen der Glasfläche mit einem gleitschichtfreien Bereich der Dichtungslippe 11 kommt. Anderseits darf die Gleitschicht nicht so weit um die Spitze der Dichtungslippe 11 herumgeführt sein, dass sie die Bildung wellenartiger Verformungen der Dichtungslippe beim Biegen des Dichtungsprofils begünstigt.

Trotz der gebogenen Verlegung des Dichtungsstrangs 1, die mit einer Stauchung der Dichtungslippe 11 verbunden ist, erfolgt keinerlei wellenartige, die Dichtfunktion oder/und das Aussehen beeinträchtigende Verformung der Dichtungslippe 11. Die Dichtungslippe 11 liegt über ihre gesamte Länge durchgehend gegen die Fensterscheibe 23 an.

**Patentansprüche**

1. Dichtungsprofil (1) zur Abdichtung einer bewegbaren Fahrzeugfensterscheibe (23) an einem gebogenen oberen Schenkel einer Rahmeneinfassung, mit wenigstens einer Dichtungslippe (11), die im Abstand zur neutralen, entsprechend einem Längsschnitt durch das Dichtungsprofil verlaufenden Biegungsfläche (15) des gebogen verlegten Dichtungsprofils (1) von einem U-Schenkel (7) eines U-förmigen Dichtungsabschnitts (25) absteht, in welchen die Fahrzeugfensterscheibe (23) parallel zu den U-Schenkeln (7,8) mit ihrem oberen Rand einschiebbar ist, wobei die Dichtungslippe (11) gegenüber einer Ausgangsdicke (S), die sie an ihrem dem U-Profilschenkel (7) zugewandten Ende aufweist, zu einer Seite hin aufgeweitet ist und die dieser Seite abgewandte Begrenzungslinie (14) der Querschnittsfläche der Dichtungslippe (11) zu deren freiem Ende hin sichelförmig ausläuft, **dadurch gekennzeichnet,**
   **dass** der Querschenkel (24) des U-förmigen Dichtungsabschnitts (25) einen U-Schenkel eines U-förmigen, eine metallische Verstärkungseinlage aufweisenden Befestigungsabschnitt (2) des Dichtungsprofils (1) zur Verbindung mit einem Karosserieflansch (4) bildet, dass der U-förmige Dichtungsabschnitt (25) einen langen U-Profilschenkel (7) und einen kurzen Profilschenkel (8) aufweist, und der lange U-Profilschenkel (7) des Dichtungsabschnitts an seinem dem U-förmigen Befestigungsabschnitt (2) abgewandten Ende einen weiteren Befestigungsabschnitt (3) zur Verbindung mit einem weiteren Karosserieflansch (5) aufweist, dass die Dichtungslippe (11 von dem gegenüber dem kurzen U-Profilschenkel (8) längeren Teil des langen U-Profilschenkels (7) absteht, und dass die Dichtungslippe (11) auf ihrer der Aufweitung (21) abgewandten Seite eine mit dem übrigen Dichtungsprofil (1) mitextrudierte Gleitschicht (18) aufweist, dass die Gleitschicht (18) aus einem Thermoplast oder thermoplastischem Elastomer besteht, welcher bzw. welches härter ist als ein thermoplastisches Elastomer, aus dem das übrige Dichtungsprofil (1) hergestellt ist, und dass die Gleitschicht (18) unter Meidung wellenartiger Verformung der Dichtungslippe (11) beim Biegen des Dichtungsprofils maximal bis an einen minimalen Rundungsradius am freien Ende der Dichtungslippe (11) heranreicht.

2. Dichtungsprofil nach Anspruch 1,
   **dadurch gekennzeichnet,**
   **dass** die Aufweitung (21) von einem Maximum (S1) zum freien Ende der Dichtungslippe (11) hin auf ein Minimum (S3) abfällt und von dem Minimum (S3) auf ein weiteres Maximum (S2) am freien Ende der Dichtungslippe (11) anwächst.

3. Dichtungslippe nach Anspruch 2,
   **dadurch gekennzeichnet,**
   **dass** für das Maximum (S1) und das weitere Maximum (S2) die Relationen gelten: S1 > ½ S und S2 > ½ S.

4. Dichtungsprofil nach Anspruch 2 oder 3,
   **dadurch gekennzeichnet,**
   **dass** für das Maximum (S1), das weitere Maximum (S2) und das Minimum (S3) die Relationen gelten bzw. die Relation gilt: S3 ≤ S1 und/oder S3 ≤ S2.

5. Dichtungsprofil nach einem der Ansprüche 2 bis 4,
   **dadurch gekennzeichnet,**
   **dass** die Länge (L1) von dem dem Schenkel zugewandten Ende der Dichtungslippe bis zu dem Minimum (S3) minimal ½ und maximal 5/6 der Gesamtlänge (L) der Dichtungslippe (11) beträgt.

6. Dichtungslippe nach einem der Ansprüche 2 bis 5,
   **dadurch gekennzeichnet,**
   **dass** die Länge L2 von dem dem Profilschenkel (7) zugewandten Ende der Dichtungslippe (11) bis zum Maximum (S1) minimal 1/6 und maximal 4/6 der Gesamtlänge (L) der Dichtungslippe (11) beträgt.

7. Dichtungsprofil nach Anspruch 1,

**dadurch gekennzeichnet,**
**dass** die Dichtungslippe (11,12) nur auf ihrer der neutralen Biegungsebene (15) zugewandten Seite aufgeweitet ist.

**Claims**

1. Sealing profile (1) for sealing a movable vehicle window pane (23) at a bent upper leg of a frame enclosure, having at least one sealing lip (11) which projects from a U-leg (7) of a U-shaped sealing portion (25) at a distance from the neutral bending surface (15), which extends corresponding to a longitudinal section through the sealing profile, of the bent laid sealing profile (1), into which sealing portion the vehicle window pane (23) can be inserted by its upper edge parallel to the U-legs (7, 8), wherein the sealing lip (11) is widened to one side with respect to a starting thickness (S) which it has at its end facing the U-profile leg (7), and the boundary line (14), which faces away from this side, of the cross-sectional surface of the sealing lip (11) runs out towards its free end in a sickle-shaped manner, **characterized**
**in that** the transverse leg (24) of the U-shaped sealing portion (25) forms a U-leg of a U-shaped fastening portion (2), which has a metallic reinforcing insert, of the sealing profile (1) for connection to a vehicle body flange (4), in that the U-shaped sealing portion (25) has a long U-profile leg (7) and a short profile leg (8), and the long U-profile leg (7) of the sealing portion has, at its end facing away from the U-shaped fastening portion (2), a further fastening portion (3) for connection to a further vehicle body flange (5), in that the sealing lip (11) projects from the part of the long U-profile leg (7) that is longer than the short U-profile leg (8), and in that the sealing lip (11) has, on its side facing away from the widening (21), a sliding layer (18) which is co-extruded with the remaining sealing profile (1), in that the sliding layer (18) consists of a thermoplastic or thermoplastic elastomer which is harder than a thermoplastic elastomer from which the remaining sealing profile (1) is produced, and in that the sliding layer (18), with avoidance of wave-like deformation of the sealing lip (11) during the bending of the sealing profile, reaches at maximum to a minimum rounding radius at the free end of the sealing lip (11) .

2. Sealing profile according to Claim 1,
**characterized**
**in that** the widening (21) decreases from a maximum (S1) towards the free end of the sealing lip (11) to a minimum (S3) and increases from the minimum (S3) to a further maximum (S2) at the free end of the sealing lip (11).

3. Sealing profile according to Claim 2,
**characterized**
**in that** the following relations apply to the maximum (S1) and the further maximum (S2): S1 > ½ S and S2 > ½ S.

4. Sealing profile according to Claim 2 or 3,
**characterized**
**in that** the following relations/relation apply/applies to the maximum (S1), the further maximum (S2) and the minimum (S3) : S3 ≤ S1 and/or S3 ≤ S2.

5. Sealing profile according to one of Claims 2 to 4,
**characterized**
**in that** the length (L1) from the end of the sealing lip that faces the leg to the minimum (S3) is a minimum of ½ and a maximum of 5/6 of the total length (L) of the sealing lip (11).

6. Sealing profile according to one of Claims 2 to 5,
**characterized**
**in that** the length L2 from the end of the sealing lip (11) that faces the profile leg (7) to the maximum (S1) is a minimum of 1/6 and a maximum of 4/6 of the total length (L) of the sealing lip (11).

7. Sealing profile according to Claim 1,
**characterized**
**in that** the sealing lip (11, 12) is widened only on its side facing the neutral bending plane (15).

**Revendications**

1. Profilé d'étanchéité (1) pour la fermeture étanche d'une vitre mobile de véhicule (23) au niveau d'un côté supérieur courbé d'un encadrement, présentant au moins une lèvre d'étanchéité (11) qui s'écarte, à une certaine distance par rapport à la surface courbée (15) du profilé d'étanchéité (1) placé de manière courbée, neutre, s'étendant à travers le profilé d'étanchéité selon une coupe longitudinale, à partir d'une branche en U (7) d'une section d'étanchéité en forme de U (25), dans laquelle la vitre de véhicule (23) peut être glissée avec son bord supérieur parallèlement aux branches en U (7, 8), la lèvre d'étanchéité (11) étant élargie, par rapport à une épaisseur de départ (S) qu'elle présente en son extrémité orientée vers la branche de profilé en U (7), vers un côté et la ligne de délimitation (14) opposée à ce côté de la section transversale de la lèvre d'étanchéité (11) s'étendant en forme de croissant vers son extrémité libre, **caractérisé en ce que** la branche transversale (24) de la section d'étanchéité en forme de U (25) forme une branche en U d'une section de fixation (2) du profilé d'étanchéité (1) en forme de U, présentant un insert de renforcement métallique, pour l'assemblage avec une bride de carrosserie (4), **en ce que** la section d'étanchéité en forme de U (25) présente une branche profilée en U longue (7) et une branche profilée courte (8) et la branche profilée en U longue (7) de la section d'étanchéité présente, au niveau de son extrémité à l'opposé de la section de fixation en forme de U (2), une autre section de fixation (3) pour l'assemblage avec une autre bride de carrosserie (5), **en ce que** la lèvre d'étanchéité (11) s'écarte de la partie plus longue par rapport à la branche profilée en U courte (8) de la branche profilée en U longue (7)
et **en ce que** la lèvre d'étanchéité (11) présente, sur son côté à l'opposé de l'élargissement (21), une couche de glissement (18) coextrudée avec le reste du profilé d'étanchéité (1), **en ce que** la couche de glissement (18) est constituée par un thermoplastique ou un élastomère thermoplastique, qui est plus dur qu'un élastomère thermoplastique à partir duquel le reste du profilé d'étanchéité (1) est fabriqué et **en ce que** la couche de glissement (18) s'étend au maximum jusqu'à un rayon de courbure minimal en l'extrémité libre de la lèvre d'étanchéité (11) tout en évitant une déformation en forme d'onde de la lèvre d'étanchéité (11) lors de la courbure du profilé d'étanchéité.

**2.** Profilé d'étanchéité selon la revendication 1, **caractérisé en ce que** l'élargissement (21) diminue à partir d'un maximum (S1) vers l'extrémité libre de la lèvre d'étanchéité (11) jusqu'à un minimum (S3) et augmente à partir du minimum (S3) jusqu'à un autre maximum (S2) en l'extrémité libre de la lèvre d'étanchéité (11).

**3.** Profilé d'étanchéité selon la revendication 2, **caractérisée en ce que** les relations suivantes sont d'application pour le maximum (S1) et pour l'autre maximum (S2) : S1 > 1/2 S et S2 > 1/2 S.

**4.** Profilé d'étanchéité selon la revendication 2 ou 3, **caractérisé en ce que** la/le(s) relation(s) suivante(s) est/sont d'application pour le maximum (S1), pour l'autre maximum (S2) et pour le minimum (S3) : S3 ≤ S1 et/ou S3 ≤ S2.

**5.** Profilé d'étanchéité selon l'une quelconque des revendications 2 à 4, **caractérisé en ce que** la longueur (L1) depuis l'extrémité de la lèvre d'étanchéité, orientée vers la branche, jusqu'au minimum (S3) représente au minimum 1/2 et au maximum 5/6 de la longueur totale (L) de la lèvre d'étanchéité (11).

**6.** Profilé d'étanchéité selon l'une quelconque des revendications 2 à 5, **caractérisée en ce que** la longueur (L2) depuis l'extrémité de la lèvre d'étanchéité (11), orientée vers la branche profilée (7), jusqu'au maximum (S1) représente au minimum 1/6 et au maximum 4/6 de la longueur totale (L) de la lèvre d'étanchéité (11).

**7.** Profilé d'étanchéité selon la revendication 1, **caractérisé en ce que** la lèvre d'étanchéité (11, 12) n'est élargie que sur son côté orienté vers le plan de courbure neutre (15).

FIG. 1

FIG. 2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6185869 B1
- US 200200446499 A1

- DE 102004043482 B4